# EUROPEAN PATENT APPLICATION

(11) **EP 2 966 716 A1**
(43) Date of publication of application: **13.01.2016**
(21) Application number: 14759690.2
(22) Date of filing: 06.03.2014
(51) Int. Cl.: H01M 8/04, H01M 8/10, H01M 8/12

(54) **POWER GENERATION SYSTEM AND POWER GENERATION SYSTEM OPERATION METHOD**

(30) Priority: 08.03.2013 JP 2013046302
(71) Applicant: Panasonic Intellectual Property Management Co., Ltd., Osaka-shi, Osaka 540-6207 (JP)
(72) Inventor: MATSUMOTO, Satoshi, Osaka-shi Osaka 540-6207 (JP)
(74) Representative: Grünecker Patent- und Rechtsanwälte PartG mbB
(86) International application number: PCT/JP2014/001249
(87) International publication number: WO 2014/136454

(57) **Abstract**

A power generation system according to the present invention includes: a fuel cell system (6) including a fuel cell (1), a case (2) configured to accommodate the fuel cell (1), an air supply unit configured to introduce outside air into the case (2) through an air supply passage (3), and a temperature detector (5) configured to detect a temperature of the outside air; a combustion device (8) configured to discharge a flue gas through a discharge passage (7); and a controller (9). The air supply passage (3) is configured to exchange heat with the discharge passage (7), and in a case where the temperature detected by the temperature detector (5) is equal to or higher than a preset first temperature when the fuel cell system (6) is operated, the controller (9) decreases an output of the combustion device (8).

## Description

### Technical Field

The present invention relates to a power generation system including a fuel cell configured to generate power using a fuel gas and an oxidizing gas.

### Background Art

Since a power generation system using a fuel cell is high in a power generation efficiency and hardly discharges air pollutants, it is expected as an energy-saving, clean power generator. Especially, a fuel cell cogeneration system configured such that heat generated at the time of the power generation is recovered as hot water in a hot water tank and the heat is utilized for hot water supply, space heating, and the like is high in a total energy efficiency, and spread as a domestic energy device is desired. However, since only the heat recovered from the power generation is inadequate as the heat for the hot water supply and the space heating, the hot water in the hot water tank or the hot water supplied from the hot water tank is generally heated by an auxiliary heat source, constituted by a combustion device, to be utilized according to need.

For the purpose of providing such a power generation system inside a building, a system having improved air supply and exhaust performances has been proposed (see PTL 1, for example). A fuel cell system disclosed in PTL 1 is a fuel cell system provided and used inside a building including an intake port. The fuel cell system disclosed in PTL 1 includes: an air introducing port through which air outside the building is introduced into the fuel cell system; an air discharge pipe through which the air in the fuel cell system is discharged to the outside of the building; and a ventilation unit. The ventilation unit introduces the air from the outside of the building into the building through the intake port, introduces the air into the fuel cell system through the air introducing port, and discharges the air to the outside of the building through the air discharge pipe.

In addition, known is a fuel cell system including a duct extending in an upper-lower direction for the purpose of improving the exhaust performance of the exhaust gas generated in the fuel cell system provided inside the building (see PTL 2, for example). In the fuel cell system disclosed in PTL 2, the duct extending in the upper-lower direction in the building and having an upper end portion located outside the building is a double pipe, and a ventilating pipe and an exhaust pipe are coupled to the duct such that the exhaust gas and the air respectively flow through the inner side and outer side of the duct.

In a case where the power generation system is provided inside the building, the following configuration may be adopted in reference to the fuel cell systems disclosed in PTLs 1 and 2. To be specific, the fuel cell system and the combustion device are separately provided, and an air supply and exhaust pipe is provided so as to cause the fuel cell system and the combustion device to communicate with each other.

In a case where the fuel cell system is operated when the atmospheric temperature is high, the temperature of, for example, an impurity removing unit constituted by ion-exchange resin provided inside the fuel cell system increases to exceed an upper temperature limit of the impurity removing unit, and this accelerates the deterioration of the impurity removing unit. In addition, regarding the fuel cell and auxiliary devices, such as an air supply unit, a pump, and a sensor, if the ambient temperature becomes higher than a temperature at which the heat resistance of each of the fuel cell and the auxiliary devices can be secured, the long-term reliability is impaired. Here, according to the fuel cell system disclosed in PTL 3, when the outside air temperature is higher than a predetermined value, the operation of the fuel cell system is not allowed.

### Citation List

### Patent Literature

PTL 1: Japanese Laid-Open Patent Application Publication No. 2006-73446
PTL 2: Japanese Laid-Open Patent Application Publication No. 2008-210631
PTL 3: Japanese Laid-Open Patent Application Publication No. 2006-147265

### Summary of Invention

### Technical Problem

However, the present inventors have found that even in the conventional technologies, such as PTLs 1 to 3, there is still room for improvement from the viewpoint of securing the further improvement of the reliability (suppression of the deterioration of parts, such as the auxiliary devices).

Here, an object of the present invention is to provide a power generation system capable of suppressing malfunctions and deterioration of parts, such as auxiliary devices, to improve the reliability and more surely operating until an expected life than before.

### Solution to Problem

As a result of diligent studies by the present inventors in consideration of the problems of the conventional technologies, the present inventors have found that the conventional fuel cell systems, such as PTLs 1 to 3, have the following problems from the viewpoint of further improvement of the reliability.

To be specific, the supply and exhaust pipe is used by both the fuel cell system and the combustion device. When the combustion device is operated, the air to be supplied to the fuel cell system may be heated by heat exchange at the supply and exhaust pipe. Especially, if the temperature of the air taken into the fuel cell system from the outside becomes high, the temperature of, for example, the impurity removing unit including the ion-exchange resin may increase to exceed the upper temperature limit of the impurity removing unit, and this may accelerate the deterioration of the impurity removing unit. If the ambient temperature of the fuel cell or the auxiliary device, such as the air supply unit, the pump, and the sensor, becomes higher than the temperature at which the heat resistance of each of the fuel cell and the auxiliary device can be secured, the life and the reliability may deteriorate.

To solve the conventional problems, a power generation system of the present invention includes: a fuel cell system including a fuel cell configured to generate power using a fuel gas and an oxidizing gas, a case configured to accommodate the fuel cell, an air supply unit configured to introduce outside air into the case through an air supply passage, and a temperature detector configured to detect a temperature of the outside air; a combustion device configured to combust a combustible gas and discharge a flue gas through a discharge passage; and a controller, wherein: the air supply passage is configured to exchange heat with the discharge passage; and in a case where the temperature detected by the temperature detector is equal to or higher than a preset first temperature when the fuel cell system is operated, the controller decreases an output of the combustion device.

With this, even in a case where the combustion device of the power generation system is operated, the increase in the temperature of the air supplied into the case configured to accommodate the fuel cell can be suppressed. Thus, the ambient temperature of the fuel cell and the auxiliary devices, such as the air supply unit, the pump, and the sensor, provided inside the fuel cell system can be suppressed to be equal to or lower than the temperature at which the heat resistance of each of the fuel cell and the auxiliary devices can be secured.

### Advantageous Effects of Invention

According to each of the power generation system and the method of operating the power generation system of the present invention, even in a case where the combustion device of the power generation system is operated, the increase in the ambient temperature of the fuel cell and the auxiliary devices, such as the pump and the sensor, provided inside the fuel cell system is suppressed. Thus, the reliability is excellent, and the long life can be secured.

### Brief Description of Drawings

[Fig. 1] Fig. 1 is a schematic diagram showing a schematic configuration of a power generation system according to Embodiment 1.
[Fig. 2] Fig. 2 is a flow chart showing schematic operations of the power generation system according to Embodiment 1.
[Fig. 3] Fig. 3 is a schematic diagram showing the schematic configuration of the power generation system according to Embodiment 2.
[Fig. 4] Fig. 4 is a flow chart showing the schematic operations of the power generation system according to Embodiment 2.
[Fig. 5] Fig. 5 is a flow chart showing the schematic operations of the power generation system according to Modification Example 1 of Embodiment 2.
[Fig. 6] Fig. 6 is a flow chart showing the schematic operations of the power generation system according to Embodiment 3.
[Fig. 7] Fig. 7 is a schematic diagram showing the schematic configuration of the power generation system according to Embodiment 4.
[Fig. 8] Fig. 8 is a flow chart showing the schematic operations of the power generation system according to Embodiment 4.

### Description of Embodiments

A power generation system according to the present invention includes: a fuel cell system including a fuel cell configured to generate power using a fuel gas and an oxidizing gas, a case configured to accommodate the fuel cell, an air supply unit configured to introduce outside air into the case through an air supply passage, and a temperature detector configured to detect a temperature of the outside air; a combustion device configured to combust a combustible material and discharge a flue gas through a discharge passage; and a controller, wherein: the air supply passage is configured to exchange heat with the discharge passage; and in a case where the temperature detected by the temperature detector is equal to or higher than a preset first temperature when the fuel cell system is operated, the controller decreases an output of the combustion device.

With this, even in a case where the combustion device is operated, the increase in the temperature of the air supplied into the case configured to accommodate the fuel cell can be suppressed, and the ambient temperature of the fuel cell and the auxiliary devices provided inside the fuel cell system can be suppressed to be equal to or lower than the temperature at which the heat resistance of each of the fuel cell and the auxiliary devices can be secured. Thus, the power generation system having the excellent reliability can be provided.

The power generation system according to the present invention may be configured such that the temperature detector is provided inside the air supply passage or the case. With this, the temperature of the air actually supplied into the case configured to accommodate the fuel cell can be surely detected.

The power generation system according to the present invention may be configured such that: the air supply passage includes a first air supply passage configured to exchange the heat with the flue gas discharged from the combustion device to the discharge passage; and the temperature detector is provided inside the first air supply passage, a portion, located downstream of the first air supply passage, of the air supply passage, or the case. With this, the temperature of the air actually supplied into the case configured to accommodate the fuel cell can be surely detected.

The power generation system according to the present invention may be configured such that the temperature detector is configured to detect the temperature of the outside air before the outside air flows through the air supply passage to exchange the heat with the discharge passage.

The power generation system according to the present invention may be configured such that: the air supply passage includes a first air supply passage configured to exchange the heat with the flue gas discharged from the combustion device to the discharge passage; and the temperature detector is provided at a portion of the air supply passage, the portion being located upstream of the first air supply passage.

The power generation system according to the present invention may be configured such that: the controller decreases the first temperature as the output of the combustion device increases and increases the first temperature as the output of the combustion device decreases.

The power generation system according to the present invention may be configured such that in a case where the temperature detected by the temperature detector is equal to or higher than a second temperature that is higher than the first temperature, the controller stops the combustion device. With this, a case where the air flowing into the case configured to accommodate the fuel cell is warmed up by the operation of the combustion device never occurs. Therefore, the temperature of the supply air is surely suppressed. Thus, the power generation system having further high reliability can be provided.

The power generation system according to the present invention may be configured to further include: a heat accumulator configured to accumulate the heat supplied from the fuel cell and the combustion device; and an accumulated heat amount detector configured to detect an accumulated heat amount that is the amount of heat accumulated in the heat accumulator, wherein: in a case where the accumulated heat amount detected by the accumulated heat amount detector is smaller than a predetermined first accumulated heat amount, and the temperature detected by the temperature detector is equal to or higher than the first temperature, the controller decreases the output of the combustion device; and in a case where the accumulated heat amount detected by the accumulated heat amount detector is equal to or larger than the first accumulated heat amount, and the temperature detected by the temperature detector is equal to or higher than the first temperature, the controller stops the combustion device.

With this, in a case where the accumulated heat amount in the heat accumulator is equal to or larger than a predetermined value (the first accumulated heat amount), the heat accumulation by the combustion of the combustion device is stopped. With this, even in a case where the temperature of the outside air is high, the increase in the temperature of the air supplied into the case configured to accommodate the fuel cell can be suppressed, and the ambient temperature of the fuel cell and the auxiliary devices provided inside the fuel cell system can be suppressed. Thus, the power generation system having excellent reliability can be provided.

Hereinafter, preferred embodiments of the present invention will be explained in reference to the drawings. In the drawings, the same reference signs are used for the same or corresponding components, and a repetition of the same explanation is avoided. In the drawings, only the components necessary to explain the present invention are shown, and the other components are not shown. The present invention is not limited to the following embodiments.

### Embodiment 1

A power generation system according to Embodiment 1 includes: a fuel cell system including a fuel cell configured to generate power using a fuel gas and an oxidizing gas, a case configured to accommodate the fuel cell, an air supply unit configured to introduce outside air into the case through an air supply passage, and a temperature detector configured to detect a temperature of the outside air; a combustion device configured to combust a combustible material and discharge a flue gas through a discharge passage; and a controller, wherein: the air supply passage is configured to exchange heat with the discharge passage; and in a case where the temperature detected by the temperature detector is equal to or higher than a preset first temperature when the fuel cell system operates, the controller reduces an output of the combustion device.

The power generation system according to Embodiment 1 may be configured such that the temperature detector is provided inside the air supply passage or the case.

The power generation system according to Embodiment 1 may be configured such that: the air supply passage includes a first air supply passage configured to exchange the heat with the flue gas discharged from the combustion device to the discharge passage; and the temperature detector is provided inside the first air supply passage, a portion, located downstream of the first air supply passage, of the air supply passage, or the case.

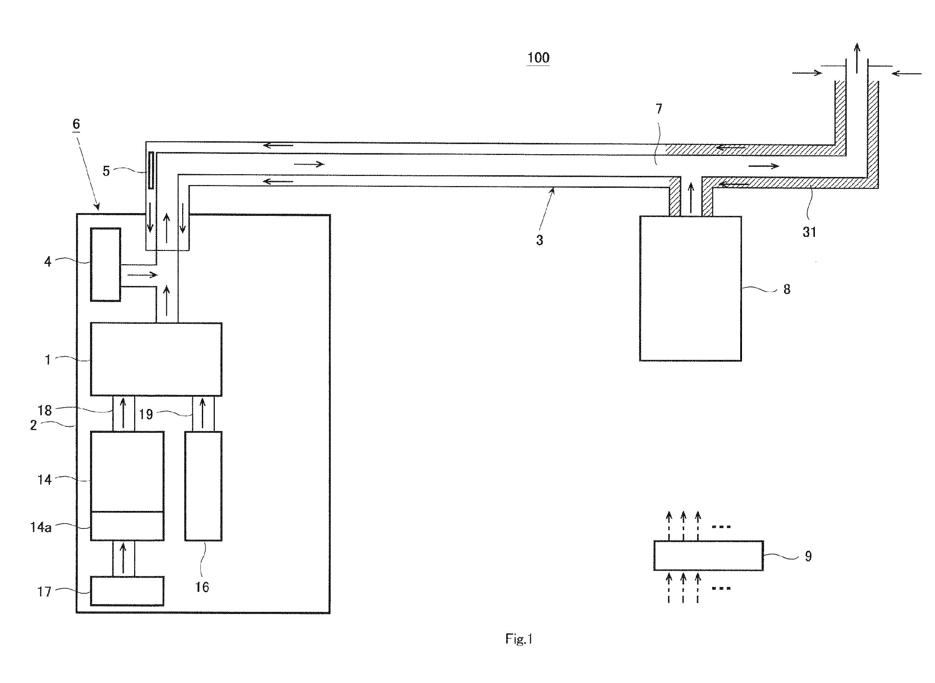

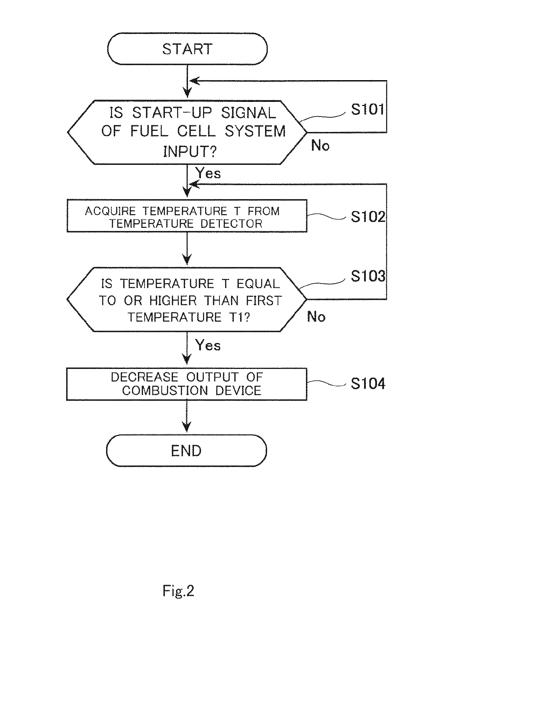

Hereinafter, one example of the power generation system according to Embodiment 1 will be explained in reference to Figs. 1 and 2.

### Configuration of Power Generation System

Fig. 1 is a schematic diagram showing a schematic configuration of the power generation system according to Embodiment 1.

As shown in Fig. 1, a power generation system 100 according to Embodiment 1 includes a fuel cell system 6, an air supply passage 3, a discharge passage 7, a combustion device 8, and a controller 9. The fuel cell system 6 includes a fuel cell 1, a ventilator 4, a fuel processor 14, an oxidizing gas supply unit 16, and a combustion air supply unit 17, and these devices are accommodated inside a case 2.

The fuel processor 14 includes a reformer (not shown) configured to generate a hydrogen-containing gas using a raw material gas and a combustor 14a configured to heat the reformer. The generated hydrogen-containing gas is supplied as the fuel gas to a fuel gas passage (not shown) of the fuel cell 1 through a fuel gas supply passage 18.

A raw material gas passage and a water supply passage (both not shown) are connected to the reformer of the fuel processor 14. A raw material gas supply unit is provided at the raw material gas passage. The raw material gas supply unit is configured to supply the raw material gas to the reformer while adjusting the flow rate of the raw material gas. For example, the raw material gas supply unit may be constituted by a flow rate control valve and a pump or may be constituted by a pump capable of adjusting the flow rate. Examples of the raw material gas include a natural gas and an LP gas.

The reformer includes a reforming catalyst. For example, the reforming catalyst may be any material as long as it can catalyze a steam-reforming reaction to generate a hydrogen-containing gas from a raw material and steam. For example, a ruthenium-based catalyst in which ruthenium (Ru) is supported by a catalyst carrier, such as alumina, or a nickel-based catalyst in which nickel (Ni) is supported by the same catalyst carrier can be used.

The fuel cell 1 is connected to the combustor 14a of the fuel processor 14 through an off fuel gas passage (not shown). The combustor 14a combusts the raw material gas supplied through the off fuel gas passage or the fuel gas unconsumed in the fuel cell, to generate a flue gas. Then, after the flue gas generated by the combustor 14a heats the reformer, the flue gas is discharged to an exhaust gas passage (not shown) to be discharged from the exhaust gas passage through the discharge passage 7 to the outside of the fuel cell system 6 (the power generation system 100).

The oxidizing gas supply unit 16 may have any configuration as long as it can supply the oxidizing gas (air) to the fuel cell 1 while adjusting the flow rate of the oxidizing gas. For example, the oxidizing gas supply unit 16 may be constituted by a fan, a blower, or the like. An oxidizing gas passage (not shown) of the fuel cell 1 is connected to the oxidizing gas supply unit 16 through an oxidizing gas supply passage 19.

The fuel cell 1 includes an anode and a cathode (both not shown). In the fuel cell 1, the fuel gas supplied to the fuel gas passage is supplied to the anode, and the oxidizing gas supplied to the oxidizing gas passage is supplied to the cathode. The fuel gas supplied to the anode and the oxidizing gas supplied to the cathode react with each other to generate electricity and heat.

The fuel gas unconsumed in the fuel cell 1 is supplied as an off fuel gas through the off fuel gas passage to the combustor 14a of the fuel processor 14. The oxidizing gas unconsumed in the fuel cell 1 is discharged as an off oxidizing gas through an exhaust air passage (not shown) and the discharge passage 7 to the outside of the fuel cell system 6 (the power generation system 100).

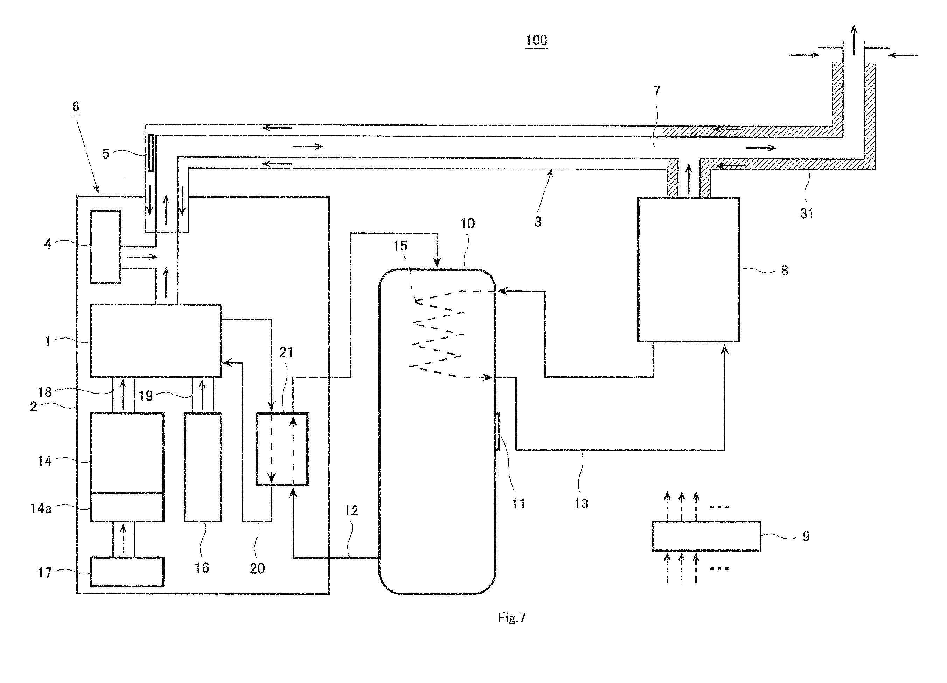

The generated electricity is supplied to an external power load (such as a domestic electrical apparatus) by a power conditioner, not shown. The generated heat is recovered by a heat medium flowing through a heat medium passage 20 (see Fig. 7). The heat recovered by the heat medium can be used to, for example, heat water.

In Embodiment 1, as the fuel cell 1, various fuel cells, such as a polymer electrolyte fuel cell, a direct internal reforming type solid-oxide fuel cell, and an indirect internal reforming type solid-oxide fuel cell, can be used. Embodiment 1 has adopted a case where the fuel cell 1 and the fuel processor 14 are configured separately. However, the present embodiment is not limited to this. As in the solid-oxide fuel cell, the fuel processor 14 and the fuel cell 1 may be configured integrally. In this case, a single unit in which the fuel cell 1 and the fuel processor 14 are covered with a common heat insulating material is configured, and the combustor 14a can heat not only the reformer but also the fuel cell 1. In the direct internal reforming type solid-oxide fuel cell, the anode of the fuel cell 1 has the function of the reformer. Therefore, the anode of the fuel cell 1 and the reformer may be configured integrally.

The ventilator 4 is configured to ventilate the case 2. Specifically, by the operation of the ventilator 4, the air outside the power generation system 100 is supplied into the case 2 through the air supply passage 3, and the gas (mainly air) in the case 2 is discharged through the discharge passage 7 to the outside of the fuel cell system 6 (the power generation system 100). Thus, the case 2 is ventilated. To be specific, in Embodiment 1, the ventilator 4 constitutes the air supply unit configured to introduce the outside air into the case 2. The ventilator 4 may be constituted by a fan, a blower, or the like.

In Embodiment 1, the ventilator 4 is used as the air supply unit. However, the present embodiment is not limited to this. For example, since the oxidizing gas supply unit 16 discharges the air, existing in the case 2, through the fuel cell 1 and the like to the discharge passage 7, the air outside the power generation system 100 may be supplied through the air supply passage 3 into the case 2. Similarly, since the combustion air supply unit 17 discharges the air, existing in the case 2, through the combustor 14a and the like to the discharge passage 7, the air outside the power generation system 100 may be supplied through the air supply passage 3 into the case 2. Therefore, the oxidizing gas supply unit 16 and/or the combustion air supply unit 17 may be used as the air supply unit.

For example, a fan, a blower, or the like provided so as to introduce the outside air through the air supply passage 3 into the case 2 may be used as the air supply unit.

The combustion device 8 is configured to combust the combustible material and accumulate the heat, generated by the combustion, in the heat accumulator (see Fig. 7). The flue gas generated by the combustion device 8 is discharged through the discharge passage 7 to the atmosphere. Examples of the combustible material include: a combustible gas, such as a natural gas; and a liquid fuel, such as kerosene.

A hole is formed at an appropriate position of a wall constituting the case 2 so as to penetrate the wall in a thickness direction. The discharge passage 7 and the air supply passage 3 are connected to the hole. The discharge passage 7 and the air supply passage 3 are configured as a so-called double pipe. The air supply passage 3 is formed such that a downstream end thereof opens in the case. An outer side of the double pipe corresponds to the air supply passage 3, and an inner side thereof corresponds to the discharge passage 7.

The air supply passage 3 and the discharge passage 7 communicate with both the fuel cell system 6 and the combustion device 8, so that fresh air is supplied to both the fuel cell system 6 and the combustion device 8 from the outside, and the exhaust gas from both the fuel cell system 6 and the combustion device 8 is discharged to the outside. The air flowing through the air supply passage 3 and the high-temperature exhaust gas flowing through the discharge passage 7 exchange heat with each other via an inner pipe surface of the double pipe.

More specifically, the air supply passage 3 branches. An upstream end of the air supply passage 3 is open to the atmosphere, and two downstream ends thereof respectively open in the case 2 and the combustion device 8. The air supply passage 3 includes a first air supply passage 31 (portion shown by hatching in Fig. 1) configured to exchange the heat with the flue gas discharged from the combustion device 8 to the discharge passage 7.

A temperature detector 5 is provided inside the air supply passage 3. The temperature detector 5 detects the temperature of the outside air flowing through the air supply passage 3 and outputs the detected temperature to the controller 9. In Embodiment 1, the temperature detector 5 may be provided inside the first air supply passage 31 of the air supply passage 3, a portion, located downstream of the first air supply passage 31, of the air supply passage 3, or the case 2. In a case where the temperature detector 5 is provided at such a place, the temperature detector 5 can directly detect the temperature of the outside air that has exchanged heat with the flue gas discharged from the combustion device 8 to the discharge passage 7.

The controller 9 may have any configuration as long as it controls respective devices constituting the power generation system 100. The controller 9 includes: a calculation processing portion, such as a microprocessor or a CPU; and a storage portion, such as a memory, configured to store programs used to execute respective control operations. The calculation processing portion of the controller 9 reads out and executes a predetermined control program stored in the storage portion. Thus, the controller 9 processes the information and performs various control operations regarding the power generation system 100 including the above control operations.

The controller 9 may be constituted by a single controller or may be constituted by a controller group constituted by a plurality of controllers that cooperate to execute the control operations of the power generation system 100. The controller 9 may be constituted by a microcontroller or may be constituted by an MPU, a PLC (Programmable Logic Controller), a logic circuit, or the like.

### Operations of Power Generation System

Next, the operations of the power generation system according to Embodiment 1 will be explained in reference to Figs. 1 and 2. Since the power generating operation of the power generation system is performed in the same manner as the power generating operation of the common fuel cell system, a detailed explanation thereof is omitted.

Fig. 2 is a flow chart showing schematic operations of the power generation system according to Embodiment 1.

As shown in Fig. 2, the controller 9 determines whether or not a start-up signal of the fuel cell system 6 is input (Step S101). Examples of a case where an operation command is input to the fuel cell system 6 includes a case where a user of the fuel cell system 6 manipulates a remote controller, not shown, to operate the fuel cell system 6 and a case where a preset operation start time of the fuel cell system 6 has come.

In a case where the operation command of the fuel cell system 6 is not input (No in Step S101), the controller 9 repeats Step S101 until the operation command of the fuel cell system 6 is input. In contrast, in a case where the operation command of the fuel cell system 6 is input (Yes in Step S101), the controller 9 proceeds to Step S102.

In Step S102, the controller 9 acquires from the temperature detector 5 a temperature T of the outside air flowing through the air supply passage 3. Next, the controller 9 determines whether or not the temperature T acquired in Step S102 is equal to or higher than a first temperature T1 (Step S103).

The first temperature is calculated in advance by an experiment or the like. The first temperature is suitably set based on, for example, the heatproof temperature of the fuel cell 1 or the heatproof temperature of the auxiliary device, such as the combustion air supply unit 17. The first temperature T1 may be set based on the temperature of the outside air, the output of the combustion device 8, and the like. The heatproof temperature of the fuel cell 1 or the heatproof temperature of the auxiliary device may be set as the first temperature T1. For example, the first temperature T1 may be 40°C, 50°C, or 80°C.

In a case where the temperature T is lower than the first temperature T1 (No in Step S103), the controller 9 repeats Steps S102 and S103 until the temperature T becomes equal to or higher than the first temperature T1. In contrast, in a case where the temperature T is equal to or higher than the first temperature T1 (Yes in Step S103), the controller 9 decreases the output of the combustion device 8 (Step S104). Then, the program is terminated.

### Operational Advantages of Power Generation System

According to the power generation system 100 of Embodiment 1 configured as above, in a case where the combustion device 8 is being operated, the increase in the temperature of the outside air flowing through the air supply passage 3 can be suppressed. Since the increase in the temperature of the outside air supplied from the air supply passage 3 into the case 2 is suppressed, the temperature in the case 2 can be prevented from increasing up to the heatproof temperatures of the fuel cell 1 and the auxiliary devices provided inside the case 2. This effect becomes significant especially when the outside air temperature is high, such as in summer.

Therefore, according to the power generation system 100 of Embodiment 1, the lives of the fuel cell 1 and the auxiliary devices can be prevented from decreasing. Thus, the power generation system having high reliability can be provided.

According to the power generation system 100 of Embodiment 1, in a case where the temperature of the outside air flowing through the air supply passage 3 is equal to or higher than the first temperature, the output of the combustion device 8 is decreased, and the operation of the combustion device 8 is continued (an operating time of the combustion device 8 is increased). Thus, the heat accumulation by the combustion device 8 can be maintained.

The power generation system 100 according to Embodiment 1 is configured such that: the combustion device 8 is provided at an upstream side of the flow of the outside air flowing through the air supply passage 3; and the fuel cell system 6 is provided at a downstream side of the flow of the outside air flowing through the air supply passage 3. However, the present embodiment is not limited to this. The power generation system 100 may be configured such that: the fuel cell system 6 is provided at the upstream side of the flow of the outside air flowing through the air supply passage 3; and the combustion device 8 is provided at the downstream side of the flow of the outside air flowing through the air supply passage 3.

The power generation system 100 according to Embodiment 1 is configured such that the controller 9 is provided outside the case 2. However, the present embodiment is not limited to this. The power generation system 100 may be configured such that the controller 9 is provided inside the case 2.

Further, the power generation system 100 according to Embodiment 1 is configured such that the hydrogen-containing gas generated by the fuel processor 14 is supplied as the fuel gas to the fuel cell 1. However, the present embodiment is not limited to this. For example, the power generation system 100 may be configured such that: in the fuel processor 14, carbon monoxide is reduced by causing the hydrogen, generated by the reforming catalyst, to flow through a shift catalyst of a shift converter, and the hydrogen is further caused to flow through a carbon monoxide remover including an oxidation catalyst or a methanation catalyst; and the hydrogen is then supplied to the fuel cell 1. A copper-zinc-based catalyst can be used as the shift catalyst, and a ruthenium-based catalyst can be used as the oxidation catalyst or the methanation catalyst.

### Embodiment 2

The power generation system according to Embodiment 2 is configured such that in the power generation system according to Embodiment 1, the temperature detector is configured to detect the temperature of the outside air before the outside air flows through the air supply passage to exchange the heat with the discharge passage.

The power generation system according to Embodiment 2 may be configured such that: the air supply passage includes a first air supply passage configured to exchange the heat with the flue gas discharged from the combustion device to the discharge passage; and the temperature detector is provided at a portion of the air supply passage, the portion being located upstream of the first air supply passage.

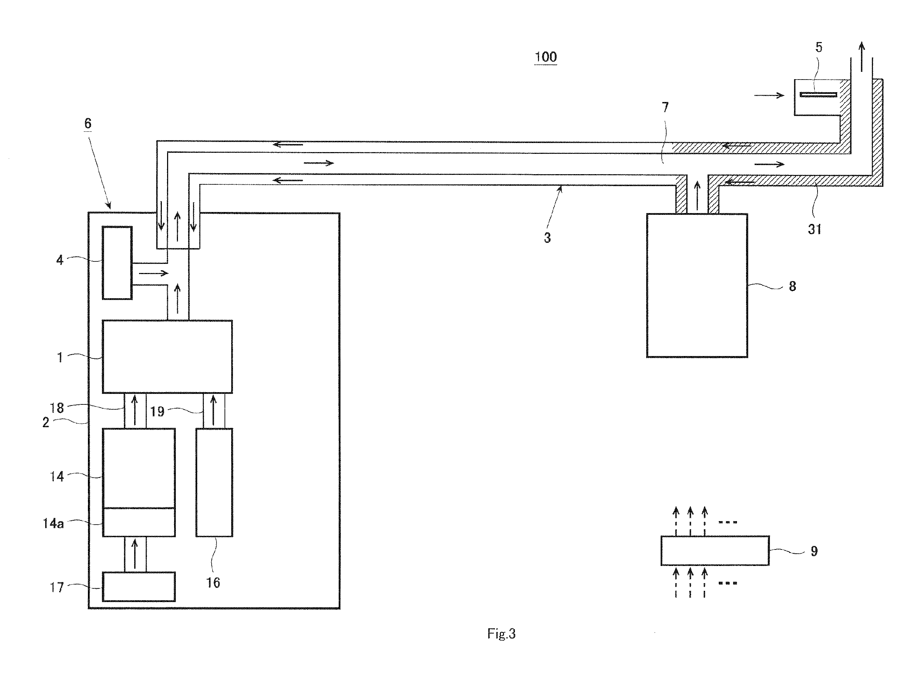

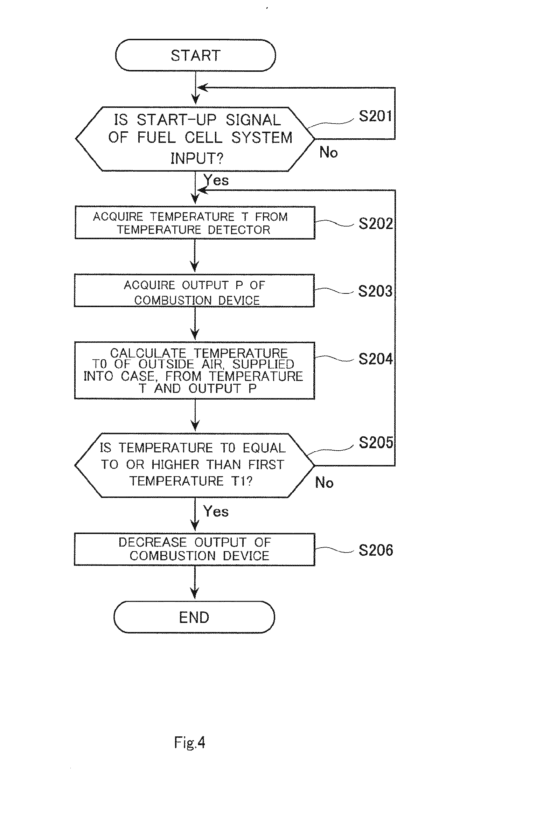

Hereinafter, one example of the power generation system according to Embodiment 2 will be explained in reference to Figs. 3 and 4.

### Configuration of Power Generation System

Fig. 3 is a schematic diagram showing the schematic configuration of the power generation system according to Embodiment 2.

As shown in Fig. 3, the power generation system 100 according to Embodiment 2 is the same in basic configuration as the power generation system 100 according to Embodiment 1 but is different from the power generation system 100 according to Embodiment 1 regarding the position of the temperature detector 5. Specifically, the temperature detector 5 is provided (configured) so as to detect the temperature of the outside air before the outside air flows through the air supply passage 3 to exchange the heat with the discharge passage 7. More specifically, the temperature detector 5 is provided at a portion of the air supply passage 3, the portion being located upstream of the first air supply passage 31.

In Embodiment 2, the portion, located upstream of the first air supply passage 31, of the air supply passage 3 and a downstream portion of the discharge passage 7 are not configured as the double pipe so as not to perform the heat exchange. Specifically, a pipe constituting the portion, located upstream of the first air supply passage 31, of the air supply passage 3 and a pipe constituting the downstream portion of the discharge passage 7 are provided so as not to contact each other.

With this, the outside air flowing through the portion, located upstream of the first air supply passage 31, of the air supply passage 3 does not exchange heat with the gas (such as the flue gas) flowing through the downstream portion of the discharge passage 7. Therefore, the temperature detector 5 can detect the temperature of the outside air before the outside air flows through the air supply passage 3 to exchange the heat with the discharge passage 7.

In Embodiment 2, the temperature detector 5 is provided at the portion, located upstream of the first air supply passage 31, of the air supply passage 3. However, the present embodiment is not limited to this. For example, the temperature detector 5 may be provided outside the case 2, the air supply passage 3, the discharge passage 7, and the combustion device 8.

### Operations of Power Generation System

Next, the operations of the power generation system 100 according to Embodiment 2 will be explained in reference to Figs. 3 and 4.

Fig. 4 is a flow chart showing the schematic operations of the power generation system according to Embodiment 2.

As shown in Fig. 4, the controller 9 determines whether or not the start-up signal of the fuel cell system 6 is input (Step S201). In a case where the operation command of the fuel cell system 6 is not input (No in Step S201), the controller 9 repeats Step S201 until the operation command of the fuel cell system 6 is input. In contrast, in a case where the operation command of the fuel cell system 6 is input (Yes in Step S201), the controller 9 proceeds to Step S202.

In Step S202, the controller 9 acquires from the temperature detector 5 the temperature T of the outside air flowing through the air supply passage 3. Next, the controller 9 acquires an output P of the combustion device 8 from the combustion device 8 (Step S203). Then, the controller 9 calculates a temperature T0 of the outside air, supplied into the case 2, from the temperature T acquired in Step S202 and the output P acquired in Step S203 (Step S204). The power generation system 100 may be configured such that: a table of the temperatures T0 calculated from the temperatures T and the outputs P is prepared in advance; the storage portion of the controller 9 stores the table; and the controller 9 acquires the temperature T0 based on the table.

Next, the controller 9 determines whether or not the temperature T0 calculated in Step S204 is equal to or higher than the first temperature T1 (Step S205). In a case where the temperature T is lower than the first temperature T1 (No in Step S205), the controller 9 repeats Steps S202 to S205 until the temperature T0 becomes equal to or higher than the first temperature T1. In contrast, in a case where the temperature T0 is equal to or higher than the first temperature T1 (Yes in Step S205), the controller 9 decreases the output of the combustion device 8 (Step S206). Then, the program is terminated.

The power generation system 100 according to Embodiment 2 configured as above also has the same operational advantages as the power generation system 100 according to Embodiment 1.

### Modification Example 1

Next, Modification Example of the power generation system 100 according to Embodiment 2 will be explained.

The power generation system of Modification Example 1 of Embodiment 2 is configured such that in the power generation system according to Embodiment 2, the controller decreases the first temperature as the output of the combustion device increases and increases the first temperature as the output of the combustion device decreases.

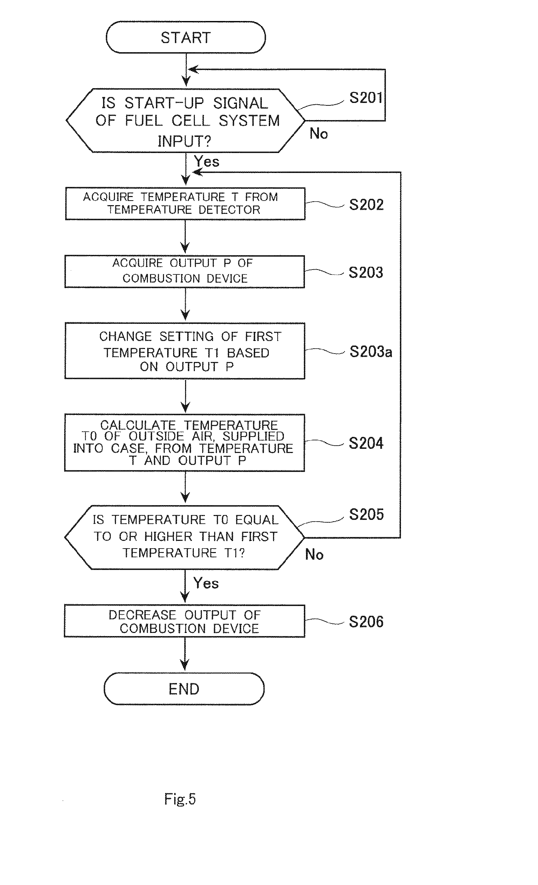

Hereinafter, one example of the power generation system of Modification Example 1 will be explained in reference to Fig. 5. Since the power generation system 100 of Modification Example 1 is the same in configuration as the power generation system 100 of Embodiment 2, a detailed explanation of the configuration thereof is omitted.

### Operations of Power Generation System

Fig. 5 is a flow chart showing the schematic operations of the power generation system of Modification Example 1 of Embodiment 2.

As shown in Fig. 5, the operations of the power generation system 100 of Modification Example 1 are basically the same as the operations of the power generation system 100 according to Embodiment 2 but different from the operations of the power generation system 100 according to Embodiment 2 in that Step S203a is executed between Steps S203 and S204.

Specifically, in Step S203a, the controller 9 changes the setting of the first temperature T1 based on the output P acquired in Step S203. More specifically, the controller 9 decreases the set temperature (the first temperature T1) as the output P of the combustion device 8 increases and increases the set temperature (the first temperature T1) as the output P of the combustion device 8 decreases. The power generation system 100 may be configured such that: a table showing the set first temperatures T1 and the outputs P is prepared in advance; the storage portion of the controller 9 stores the table; and the controller 9 changes the setting of the first temperature T1 based on the table.

The power generation system 100 according to Modification Example 1 configured as above also has the same operational advantages as the power generation system 100 according to Embodiment 2. According to the power generation system 100 of Modification Example 1, by changing the setting of the first temperature T1, the operation of the combustion device 8 can be continued longer (the operating time of the combustion device 8 can be made longer) than that of the power generation system 100 according to Embodiment 2. Thus, the heat accumulation by the combustion device 8 can be further maintained.

### Embodiment 3

The power generation system according to Embodiment 3 is configured such that in the power generation system according to Embodiments 1 and 2 (including Modification Example), in a case where the temperature detected by the temperature detector is equal to or higher than the second temperature that is higher than the first temperature, the controller stops the combustion device.

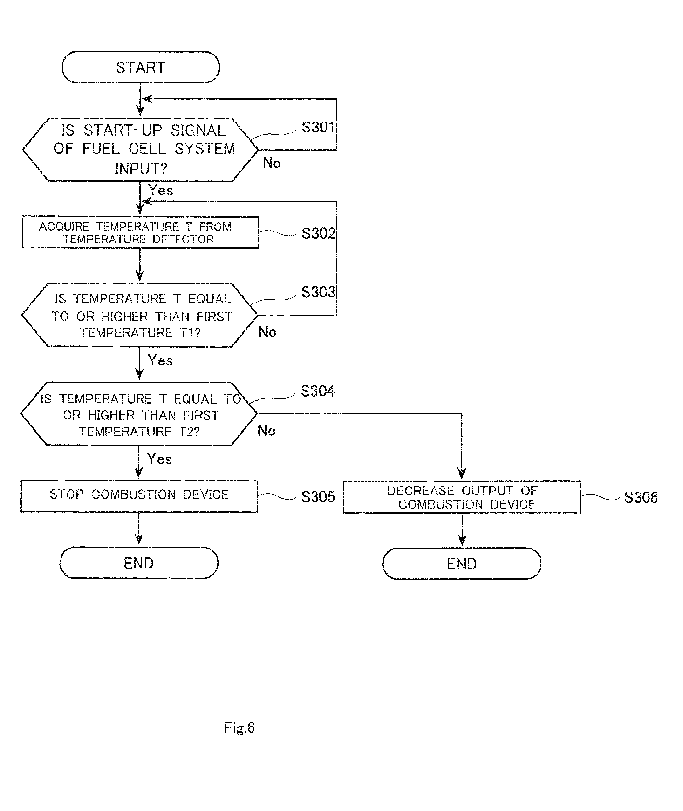

Hereinafter, one example of the power generation system according to Embodiment 3 will be explained in reference to Fig. 6. Since the power generation system according to Embodiment 3 is the same in configuration as the power generation system 100 of Embodiment 1, a detailed explanation of the configuration thereof is omitted.

### Operations of Power Generation System

Fig. 6 is a flow chart showing the schematic operations of the power generation system according to Embodiment 3.

As shown in Fig. 6, the operations in Steps S301 to S303 of the power generation system 100 according to Embodiment 3 are respectively the same as the operations in Steps S101 to S103 of the power generation system 100 according to Embodiment 1, but the operations in Step S304 and subsequent steps are different. Hereinafter, the operations in Step S304 and subsequent steps will be explained.

In a case where the temperature T acquired in Step S302 is equal to or higher than the first temperature T1 (Yes in Step S303), the controller 9 proceeds to Step S304. In Step S304, the controller 9 determines whether or not the temperature T acquired in Step S302 is equal to or higher than the second temperature T2.

The second temperature T2 is higher than the first temperature T1 and is set arbitrarily. The second temperature T2 is calculated in advance by an experiment or the like. The second temperature T2 is suitably set based on, for example, the heatproof temperature of the fuel cell 1 or the heatproof temperature of the auxiliary device. The second temperature T2 may be set based on the temperature of the outside air, the output of the combustion device 8, and the like. The heatproof temperature of the fuel cell 1 or the heatproof temperature of the auxiliary device may be set as the second temperature T2. For example, the second temperature T2 may be 45°C, 55°C, or 85°C.

In a case where the temperature T is equal to or higher than the second temperature T2 (Yes in Step S304), the controller 9 stops the combustion device 8 (Step S305). Then, the program is terminated. In contrast, in a case where the temperature T is lower than the second temperature T2 (No in Step S304), the controller 9 decreases the output of the combustion device 8 (Step S306). Then, the program is terminated.

The power generation system 100 according to Embodiment 3 configured as above also has the same operational advantages as the power generation system 100 according to Embodiment 1.

According to the power generation system 100 of Embodiment 3, in a case where the temperature detected by the temperature detector 5 is equal to or higher than the second temperature that is higher than the first temperature, the combustion device 8 is stopped. With this, the increase in the temperature of the outside air supplied from the air supply passage 3 into the case 2 is surely suppressed. Therefore, the temperature in the case 2 can be prevented from increasing up to the heatproof temperatures of the fuel cell 1 and the auxiliary devices provided inside the case 2.

Therefore, according to the power generation system 100 of Embodiment 3, the lives of the fuel cell 1 and the auxiliary devices can be prevented from decreasing. Thus, the power generation system having further high reliability can be provided.

### Embodiment 4

The power generation system according to Embodiment 4 is configured such that the power generation system according to any one of Embodiments 1 to 3 (including Modification Example) further includes: a heat accumulator configured to accumulate the heat supplied from the fuel cell and the combustion device; and an accumulated heat amount detector configured to detect an accumulated heat amount that is the amount of heat accumulated in the heat accumulator, wherein: in a case where the accumulated heat amount detected by the accumulated heat amount detector is smaller than a predetermined first accumulated heat amount, and the temperature detected by the temperature detector is equal to or higher than the first temperature, the controller decreases the output of the combustion device; and in a case where the accumulated heat amount detected by the accumulated heat amount detector is equal to or larger than the first accumulated heat amount, and the temperature detected by the temperature detector is equal to or higher than the first temperature, the controller stops the combustion device.

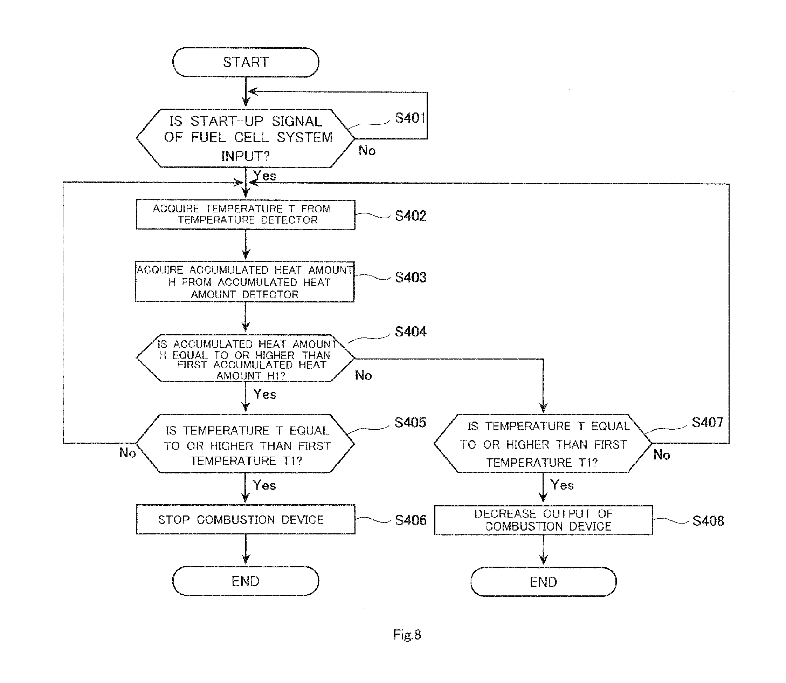

Hereinafter, one example of the power generation system according to Embodiment 4 will be explained in reference to Figs. 7 and 8.

### Configuration of Power Generation System

Fig. 7 is a schematic diagram showing the schematic configuration of the power generation system according to Embodiment 4.

As shown in Fig. 7, the power generation system 100 according to Embodiment 4 is the same in basic configuration as the power generation system 100 according to Embodiment 1 but is different from the power generation system 100 according to Embodiment 1 in that the power generation system 100 according to Embodiment 4 further includes a heat accumulator 10 and a temperature detector 11.

The heat accumulator 10 is configured to accumulate, as hot water, the heat supplied from the fuel cell 1 and the combustion device 8. Specifically, the heat accumulator 10 is constituted by a tank formed so as to extend in a vertical direction.

A first heat exchanger 15 is provided inside the heat accumulator 10, and the combustion device 8 is connected to the first heat exchanger 15 through a heating passage 13. Water (hot water) heated by the heat generated by the combustion device 8 flows through the heating passage 13. The first heat exchanger 15 is configured to perform the heat exchange between the hot water flowing through the heating passage 13 and the water stored in the heat accumulator 10. With this, the heat generated by the combustion device 8 is accumulated in the heat accumulator 10.

An upstream end of an exhaust heat recovery passage 12 is connected to a lower portion of the heat accumulator 10. A downstream end of the exhaust heat recovery passage 12 is connected to an upper portion (in the present embodiment, an upper end portion) of the heat accumulator 10. A second heat exchanger 21 is provided at a portion of the exhaust heat recovery passage 12. The second heat exchanger 21 is configured to perform the heat exchange between the heat medium passage 20 configured to recover the heat generated by the fuel cell 1 and the exhaust heat recovery passage 12. With this, the heat generated by the fuel cell 1 is accumulated in the heat accumulator 10. The heat accumulator 10 may be configured to store the heat generated by, for example, the combustor 14a of the fuel processor 14.

Further, the temperature detector 11 configured to detect the temperature of the water in the heat accumulator 10 is provided at an appropriate position of the heat accumulator 10. A thermistor or the like can be used as the temperature detector 11. The temperature detector 11 is configured to output the detected temperature to the controller 9. Then, the controller 9 calculates the amount of heat accumulated in the heat accumulator 10, from the temperature detected by the temperature detector 11, the capacity of the heat accumulator 10, and the like. Therefore, in Embodiment 4, the controller 9 and the temperature detector 11 constitute the accumulated heat amount detector.

The temperature detector 11 may be configured to calculate the amount of heat accumulated in the heat accumulator 10, from the temperature detected by the temperature detector 11 and the like and output the detected amount to the controller 9. In this case, the temperature detector 11 constitutes the accumulated heat amount detector.

### Operations of Power Generation System

Next, the operations of the power generation system according to Embodiment 4 will be explained in reference to Figs. 7 and 8.

Fig. 8 is a flow chart showing the schematic operations of the power generation system according to Embodiment 4.

As shown in Fig. 8, the controller 9 determines whether or not the start-up signal of the fuel cell system 6 is input (Step S401). In a case where the operation command of the fuel cell system 6 is not input (No in Step S401), the controller 9 repeats Step S401 until the operation command of the fuel cell system 6 is input. In contrast, in a case where the operation command of the fuel cell system 6 is input (Yes in Step S401), the controller 9 proceeds to Step S402.

In Step S402, the controller 9 acquires from the temperature detector 5 the temperature T of the outside air flowing to the air supply passage 3. Next, the controller 9 acquires from the accumulated heat amount detector an accumulated heat amount H that is the amount of heat accumulated in the heat accumulator 10 (Step S403). The order of Steps S402 and S403 may be reversed. Step S402 may be executed after Step S404.

Next, the controller 9 determines whether or not the accumulated heat amount H acquired in Step S403 is equal to or larger than a first accumulated heat amount H1 (Step S404). The first accumulated heat amount H1 is preset arbitrarily. For example, the first accumulated heat amount H1 may be 90% of the accumulated heat amount of the heat accumulator 10 that is in a fully accumulated state, 80% of the accumulated heat amount of the heat accumulator 10 that is in the fully accumulated state, or 70% of the accumulated heat amount of the heat accumulator 10 that is in the fully accumulated state.

The fully accumulated state denotes a state where the water flowing through the exhaust heat recovery passage 12 cannot absorb the heat generated by the fuel cell 1. Specifically, the fully accumulated state denotes a state where in the second heat exchanger 21, the water flowing through the exhaust heat recovery passage 12 cannot receive the heat from the heat medium that has recovered the heat generated by the fuel cell 1 (the heat medium flowing through the heat medium passage 20).

In a case where the accumulated heat amount H is equal to or larger than the first accumulated heat amount H1 (Yes in Step S404), the controller 9 proceeds to Step S405. In Step S405, the controller 9 determines whether or not the temperature T acquired in Step S402 is equal to or higher than the first temperature T1.

In a case where the temperature T is lower than the first temperature T1 (No in Step S405), the controller 9 returns to Step S402. In contrast, in a case where the temperature T is equal to or higher than the first temperature T1 (Yes in Step S405), that is, in a case where the accumulated heat amount H is equal to or larger than the first accumulated heat amount H1 and the temperature T is equal to or higher than the first temperature T1, the controller 9 stops the output of the combustion device 8 (Step S406). Then, the program is terminated.

In a case where the accumulated heat amount H is smaller than the first accumulated heat amount H1 (No in Step S404), the controller 9 proceeds to Step S407. In Step S407, the controller 9 determines whether or not the temperature T acquired in Step S402 is equal to or higher than the first temperature T1.

Then, in a case where the temperature T is lower than the first temperature T1 (No in Step S407), the controller 9 returns to Step S402. In contrast, in a case where the temperature T is equal to or higher than the first temperature T1 (Yes in Step S407), that is, in a case where the accumulated heat amount H is smaller than the first accumulated heat amount H1 and the temperature T is equal to or higher than the first temperature T1, the controller 9 decreases the output of the combustion device 8 (Step S408). Then, the program is terminated.

The power generation system 100 according to Embodiment 4 configured as above also has the same operational advantages as the power generation system 100 according to Embodiment 1.

According to the power generation system 100 of Embodiment 4, in a case where the accumulated heat amount of the heat accumulator 10 is smaller than the first accumulated heat amount, and the temperature detected by the temperature detector 5 is equal to or higher than the first temperature, the output of the combustion device 8 is decreased, and the operation of the combustion device 8 is continued. With this, according to the power generation system 100 of Embodiment 4, the power generating operation of the fuel cell system 6 can be executed while maintaining the heat accumulation by the combustion device 8.

In order to execute the power generating operation of the fuel cell system 6 when the heat accumulator 10 is in the fully accumulated state, it is necessary to discharge the heat (hot water) accumulated in the heat accumulator 10 and supply water (cold water) to the heat accumulator 10. However, according to the power generation system 100 of Embodiment 4, in a case where the accumulated heat amount of the heat accumulator 10 is equal to or larger than the first accumulated heat amount, and the temperature detected by the temperature detector 5 is equal to or higher than the first temperature, the combustion device 8 is stopped.

With this, according to the power generation system 100 of Embodiment 4, the power generating operation of the fuel cell system 6 can be executed without discharging the heat accumulated in the heat accumulator 10. Thus, the power generation system having excellent energy efficiency can be provided.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention. In addition, various inventions can be made by suitable combinations of a plurality of components disclosed in the above embodiments.

### Industrial Applicability

The power generation system and the method of operating the power generation system according to the present invention are useful since the reliability can be improved by securing the lives of the fuel cell, the auxiliary devices, and the like.

### Reference Signs List

- 1: fuel cell
- 2: case
- 3: air supply passage
- 4: ventilator
- 5: temperature detector
- 6: fuel cell system
- 7: discharge passage
- 8: combustion device
- 9: controller
- 10: heat accumulator
- 11: temperature detector
- 12: exhaust heat recovery passage
- 13: heating passage
- 14: fuel processor
- 14a: combustor
- 15: first heat exchanger
- 16: oxidizing gas supply unit
- 17: combustion air supply unit
- 18: fuel gas supply passage
- 19: oxidizing gas supply passage
- 20: heat medium passage
- 21: second heat exchanger
- 31: first air supply passage
- 100: power generation system

## Claims

1. A power generation system comprising:
a fuel cell system including a fuel cell configured to generate power using a fuel gas and an oxidizing gas, a case configured to accommodate the fuel cell, an air supply unit configured to introduce outside air into the case through an air supply passage, and a temperature detector configured to detect a temperature of the outside air;
a combustion device configured to combust a combustible material and discharge a flue gas through a discharge passage; and
a controller, wherein:
the air supply passage is configured to exchange heat with the discharge passage; and
in a case where the temperature detected by the temperature detector is equal to or higher than a preset first temperature when the fuel cell system is operated, the controller decreases an output of the combustion device.

2. The power generation system according to claim 1, wherein the temperature detector is provided inside the air supply passage or the case.

3. The power generation system according to claim 2, wherein:
the air supply passage includes a first air supply passage configured to exchange the heat with the flue gas discharged from the combustion device to the discharge passage; and
the temperature detector is provided inside the first air supply passage, a portion, located downstream of the first air supply passage, of the air supply passage, or the case.

4. The power generation system according to claim 1, wherein the temperature detector is configured to detect the temperature of the outside air before the outside air flows through the air supply passage to exchange the heat with the discharge passage.

5. The power generation system according to claim 4, wherein:
the air supply passage includes a first air supply passage configured to exchange the heat with the flue gas discharged from the combustion device to the discharge passage; and
the temperature detector is provided at a portion of the air supply passage, the portion being located upstream of the first air supply passage.

6. The power generation system according to claim 4 or 5, wherein the controller decreases the first temperature as the output of the combustion device increases and increases the first temperature as the output of the combustion device decreases.

7. The power generation system according to any one of claims 1 to 6, wherein in a case where the temperature detected by the temperature detector is equal to or higher than a second temperature that is higher than the first temperature, the controller stops the combustion device.

8. The power generation system according to any one of claims 1 to 7, further comprising:
a heat accumulator configured to accumulate the heat supplied from the fuel cell and the combustion device; and
an accumulated heat amount detector configured to detect an accumulated heat amount that is the amount of heat accumulated in the heat accumulator, wherein:
in a case where the accumulated heat amount detected by the accumulated heat amount detector is smaller than a predetermined first accumulated heat amount, and the temperature detected by the temperature detector is equal to or higher than the first temperature, the controller decreases the output of the combustion device; and
in a case where the accumulated heat amount detected by the accumulated heat amount detector is equal to or larger than the first accumulated heat amount, and the temperature detected by the temperature detector is equal to or higher than the first temperature, the controller stops the combustion device.

9. A method of operating a power generation system,
the power generation system comprising:
a fuel cell system including a fuel cell configured to generate power using a fuel gas and an oxidizing gas, a case configured to accommodate the fuel cell, an air supply unit configured to introduce outside air into the case through an air supply passage, and a temperature detector configured to detect a temperature of the outside air; and
a combustion device configured to combust a combustible material and discharge a flue gas through a discharge passage,
the air supply passage being configured to exchange heat with the discharge passage,
the method comprising the steps of:
(a) inputting a start-up signal of the fuel cell system; and
(b) in a case where the temperature detected by the temperature detector is equal to or higher than a preset first temperature after the step (a), reducing an output of the combustion device.

10. The method according to claim 9, wherein the temperature detector is configured to detect the temperature of the outside air before the outside air flows through the air supply passage to exchange the heat with the discharge passage,
the method further comprising the step of:
(c) decreasing the first temperature as the output of the combustion device increases and increasing the first temperature as the output of the combustion device decreases.

11. The method according to claim 9 or 10, further comprising the step of:
(d) in a case where, after the step (a), the temperature detected by the temperature detector is equal to or higher than a second temperature that is higher than the first temperature, stopping the combustion device.

12. The power generation system according to any one of claims 9 to 11,
the power generation system further comprising:
a heat accumulator configured to accumulate the heat supplied from the fuel cell and the combustion device; and
an accumulated heat amount detector configured to detect an accumulated heat amount that is the amount of heat accumulated in the heat accumulator,
the method further comprising the steps of:
(e) after the step (a), decreasing the output of the combustion device in a case where the accumulated heat amount detected by the accumulated heat amount detector is smaller than a predetermined first accumulated heat amount, and the temperature detected by the temperature detector is equal to or higher than the first temperature; and
(f) after the step (a), stopping the combustion device in a case where the accumulated heat amount detected by the accumulated heat amount detector is equal to or larger than the first accumulated heat amount, and the temperature detected by the temperature detector is equal to or higher than the first temperature.
